# EUROPEAN PATENT APPLICATION

(11) **EP 3 821 769 A1**
(43) Date of publication of application: **19.05.2021**
(21) Application number: 19209685.7
(22) Date of filing: 18.11.2019
(51) Int. Cl.: A47J 27/00, A47J 36/02

(54) **SMART COOKWARE FOR USE ON INDUCTION COOKTOPS**

(71) Applicant: Ztove ApS, 5260 Odense S (DK)
(72) Inventor: Favrholdt, Peter, DK-5220 Odense SOE (DK)
(74) Representative: Klimaitiene, Otilija

(57) **Abstract**

There is disclosed cookware for use on an induction cooktop that has an improved temperature measurement and control. Specifically, there is provided cookware with an integrated temperature sensor, energy harvesting coil, control electronics and, metal walls. An unusual feature of such integrated cookware is that it has its walls made of conductive material or metal. This feature provides the appearance and use as of a conventional pot and the outer layer being resistant to high temperatures and wear. Meanwhile, the ferromagnetic layer embedded between the inner and outer walls allowing to heat the pot with the induction provided by the cooktop.

The cookware is a pot or bowl or other kitchen vessel having an inner wall (1), outer wall (2), heating layer (3) made of ferromagnetic metal, energy harvesting coil (4), the temperature sensor (5) and the control electronics (7). These features make the pot or other cookware seem like conventional pot and at the same time allowing smart cooking upon the control of different smart devices and control modules.

## Description

### TECHNICAL FIELD

The present invention relates to cookware for use on an induction cooktop that has improved temperature measurement and control. Specifically, the invention is directed to cookware with an integrated temperature sensor, energy harvesting coil, electronics for smart cooking and metal walls with the appearance and maintenance of a conventional pot.

### BACKGROUND ART

The present invention relates to cookware for use on an induction cooktop that improves temperature measurement and control. Specifically, the invention is directed to cookware with an integrated temperature sensor, energy harvesting coil, and control electronics.

When cooking food, i.e. heating, frying or boiling using cookware e. g. a pan or a pot on a heating device (e.g. stove or induction cooker), it is crucial for obtaining a good result, that the heat is adjusted to obtain the required temperature for the desired cooking process. If too much or too little heat is applied, the following problems arise:
- When boiling, the vaporizing of the water will be increased, with more and bigger bubbles. Cooking e.g. potatoes or pasta the water might overflow the pot with the inconvenience of cleaning afterward.
- When boiling e. g. rice, all the water might evaporate (as steam) and leave the pot. With no water to absorb the heat, the temperature quickly increases at the bottom of the pot. When the temperature rises above approximately 150°C the food in the bottom of the pot will be burned. This produces flavor and odor which is unpleasant and destroys the rest of the food in the pot. Also, the cleaning of the pot afterward is inconvenient.
- When frying e.g. meat, if too much heat was applied the temperature will become too high causing the meat to get burned with a black crust and bad/bitter taste as a result. Eating burned food deemed to be unhealthy (e.g., causing cancer).
- Melting e.g. butter, sugar or chocolate requires meticulous adjustment of the heat such that the temperature is kept just above the melting point, but doesn't become too high where the food is destroyed.

Temperature control is traditionally achieved by placing a temperature sensor in the pan or pot. The sensor and its electronics in the cookware read the temperature and sends the actual temperature value to external devices like an induction cooktop and/or a mobile smart device. The induction cooktop will utilize an algorithm to determine whether to supply or how much power to supply to the induction heating coil to achieve the desired temperature.

Traditionally, the cookware with a temperature sensor and other smart features employs batteries to power the control electronics. This is inconvenient because the batteries have to be changed frequently. This means that the cookware has to limit its power usage which has a big impact on the amount of signal processing that can be done by the electronics in the cookware. Furthermore, traditionally assigning where the cookware is placed on the cooktop is an inconvenient and manual process that reduces the intuitive easy use of the product.

Cookware for induction cooktops usually is made with the ferromagnetic bottom layer which is heated by the cooker induction coils by inducing Eddy current in this ferromagnetic layer. Therefore, traditional embedding the temperature sensor in the cookware is a slow and labor-intensive process that requires the drilling of a very precise hole sideways into the bottom of the cookware, as per example in the US patent US9648975B2. This method is also very limiting to how the temperature sensor and other components can be placed and arranged in the cookware.

New and inventive solutions may elaborate complex constructions with non-magnetic materials for the outer walls and layers of the induction cookware. For example, a US patent application 2014033928A1 discloses non-magnetic and non-metal outer layer: "preferably outer wall is made fully or partially from a material that is not heated by the time-varying electromagnetic field that emanates from the induction coil. The outer wall can be made from a plastic material such as bulk molding compound, melamine or liquid crystal polymer, for example." Such an outer wall of the pot is transparent for induction and does not impede the induction to heat other magnetic layers inside the pot.

A Japanese patent application JPH06333670 writes about an induction cooker with two metal walls and the induction heating member between them. The problem solved is increasing the induction of the heating member by using a special powdered resin layer on the induction coil. However, this is not about the outer layer of the two-layered pot to be heated by the induction coil. This invention solves the problem to prevent heating the outer wall of the cooker by using a special powdered resin layer spread below the induction coil. Usually, induction cooktop coils have ferrite bars under the coil for isolating the magnetic field to the objects below. This invention similarly employs a resin composition layer with soft magnetic metal particles which also isolate outer iron pot from the coil magnetic field. Moreover, this is not a conventional induction hob but a specialized cooker comprising the outer iron pot with coils, and the inner iron pot. The resin with metal particles is used as an isolator layer of the magnetic field from the heating coil.

The pot construction with inner and outer walls and internal heating layers is also suitable to implement into the cookware temperature sensors and energy harvesting coils. A US patent US3742178A an induction coil 60 is implemented between the inner and outer walls of the pot for energy harvesting and the temperature sensor 63 is located in the pot. The vessel is heated by the induction coil which operates at high frequency. The invention includes a temperature sensing unit comprising a temperature detection unit and a temperature receiving unit. The former unit is incorporated in the cooking vessel while the latter unit is remotely located therefrom in the induction range. The aforesaid temperature receiving unit receives radio frequency transmissions of temperature data from the temperature detection unit in the vessel. The temperature detection unit in the vessel is powered by the main field produced by the induction coil. This cookware is disclosed to have a non-metal outer wall.

Another US patent US9648975B2 discloses a temperature-controlled heatable object in which a temperature sensor is connected to a Radio Frequency Identification (RFID) tag. The RFID tag is located within the handle of the object, and the temperature sensor is placed in contact with the object. In the first embodiment of the invention, the temperature sensor is partially embedded within the object via a notch located in the side of the object. In a second embodiment of the invention, a temperature sensor is imbedded within a tunnel drilled within the base of the object. In a third embodiment, a temperature sensor is imbedded between the bottom of the object and a slab attached to the bottom of the object. The sensor can be located in a slot formed in either the slab or the bottom of the object. Handles and receivers for mounting the handles to the temperature controllable objects are also provided. However, this invention has limitations to implement energy harvesting coils and, therefore, provide autonomous processing and control function in the cookware. Moreover, drilling the bottom layer for placement of the temperature sensor is a complicated technical process.

The closest prior art to the present invention is a US patent US9955529B2 disclosing smart cookware which comprises an inductively powered cooking appliance and an associated wireless power supply for producing an electromagnetic field. The cooking appliance may include a secondary and a metal portion where the wireless power supply is capable of providing power to both. The cooking appliance may communicate with the wireless power supply to control the temperature of the metal portion and the amount of power transferred to the secondary. A smart handle connected to the secondary may be capable of performing various functions. The smart handle may also be capable of displaying and monitoring the temperature. However, this patent writes about the material of pan base in the way of being a separate from the vessel and not conductive: "the pan base 205 can be made of a material that has sufficient magnetic permeability to allow the inductive power transfer to the secondary 245 and the body 220. The pan base 205 material may also be nonconductive." Consequently, the outer layer of this smart cookware is still non-metal and also separate.

Therefore, the use of electrically conductive material or metal material for the outer walls of the induction cookware is inventive subject allowing not to screen the cooktop induction from the cooktop coil to the inner ferromagnetic layer, temperature sensors and harvesting coils located in the cookware.

### BRIEF DESCRIPTION

The present invention relates to cookware for use on an induction cooktop that has improved temperature measurement and control features. Specifically, the invention is directed to cookware with an integrated temperature sensor, energy harvesting coil, and control electronics. To solve the above-mentioned problem, the present invention provides cookware for use on induction cooktop comprising:
- an inner wall that forms a cavity to hold a substance to be heated, the inner wall made from stainless steel;
- an outer wall made of an electrically conductive material;
- one or more inner layers of material in between the inner and outer wall where at least one of the inner layers is a magnetic alloy, which may be heated by an electromagnetic field generated by the induction cooktop thereby heating the inner wall and the substance in it,
wherein the outer wall has been sealed to the inner wall to establish a closed compartment in-between said walls and the inner layers comprising ferromagnetic material are tightly embedded between the inner wall and the outer wall, together with the temperature sensor, energy harvesting coil, and other elements, e.g. parts of control electronics.

Such a construction of the cookware allows efficient thermal regulation and energy harvesting and provides appearance with the use of the cookware as a normal metal pot for an induction cooktop.

### BRIEF DESCRIPTION OF DRAWINGS

To understand the smart cookware and temperature regulation and energy harvesting, and appreciate its practical applications, the following pictures are provided and referenced hereafter. Figures are given as examples only and in no way should limit the scope of the invention.
- FIG. 1: shows the use of smart cookware with an induction cooktop and a smart device arranged for control of the cooking process.
- FIG. 2: shows the general design of the cookware. It is comprised of an inner wall made from stainless steel, the outer wall made of metal and other components placed between these walls.
- FIG. 3: shows how the outer wall has a pre-bend bottom that is pressed against the inner layers of the cookware to create tension.
- FIG. 4: shows an exploded view of the cookware with a groove 9 in the inner layers.

### DRAWINGS - Reference Numerals

**1** the inner wall of the cookware (pot or bowl) made of stainless steel or other metal;
**2** the outer wall of the cookware (pot or bowl) made of stainless steel or other non-ferromagnetic metal;
**3** the inner heating layers of the cookware (pot or bowl) made of a ferromagnetic metal;
**4** the energy harvesting coil arranged to collect the electric energy from the heating coil of the induction cooktop;
**5** the temperature sensor arranged to measure the temperature of the cookware (outer wall, inner wall, and heating layers);
**6** the space between the inner and outer walls which may hold an insulating material or a vacuum;
**7** the control electronics of the cookware for the temperature sensor and the harvesting coil;
**8** the bottom of the outer wall is pre-bend to a concave shape before assembling and welding the inner and outer walls of the cookware;
**9** a stamped groove in the inner layers to make space for the energy harvesting coil and the temperature sensor;
**10** the surface of an induction cooktop;
**11** the heating coil of the induction cooktop;
**12** the controller of the heating coil of the induction cooktop;
**13** communication means in the induction cooktop for controlling a cooking process;
**14** a smart device for control of the cooktop and the cookware, e.g., smartphone or tablet.

### DETAILED DESCRIPTION

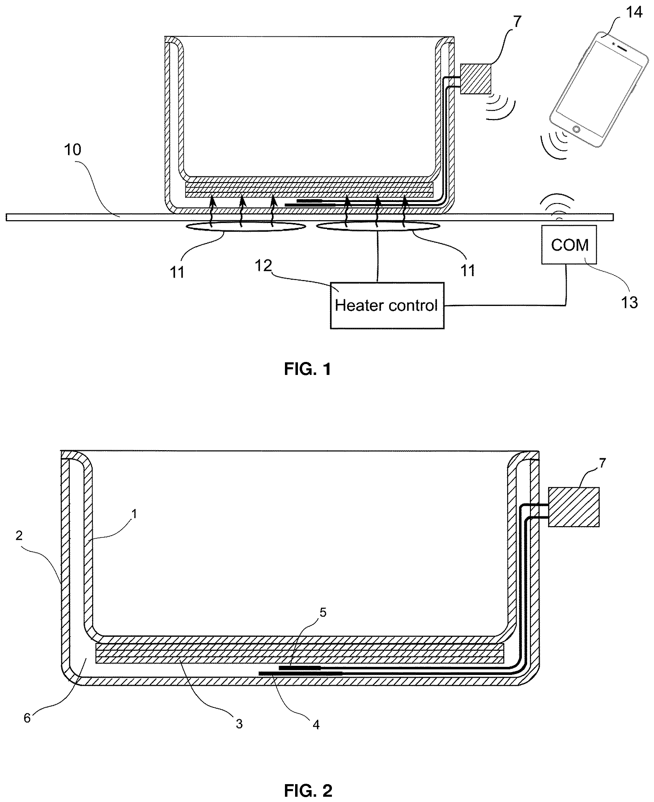

Referring to FIG. 2 there is shown the outer wall 2 of the pot where the outer wall is made from an electrically conductive material like steel, aluminum or other non-ferromagnetic metals. The outer wall 2 of the pot also made from an electrically conductive material like steel, aluminum or other metals. The inner heating layers 3 are between the inner wall 1 and the outer wall 2 where at least one layer of the internal layers 3 is made from a magnetic alloy. The temperature sensor 4 is connected to the control electronics 7 of the cookware. The energy harvesting coil 5 is also connected to the electronics to provide it with power. Volume 6 between the inner and outer walls of the cookware may hold an insulating material or a vacuum. The control electronics 7 communicate by wireless means (e.g., Bluetooth or Wifi or any other) with various external devices such as mobile smart devices and an induction cooktop. A groove 9 is provided in the inner layers 3 to make space for the energy harvesting coil 4 and the temperature sensor 5.

The invention is the design of cookware with a temperature sensor, integrated electronics, energy harvesting coil, and metal walls as of the conventional cookware.

Energy harvesting coil 4 is enclosed in an electrically conductive material to provide power for the electronics 7. The energy harvesting coil 4 is connected via a charge controller to an energy storage device like a rechargeable battery, or a supercapacitor. The coil 4 is embedded in an electrically conductive material that is just thin enough so the magnetic field generated by the induction cooktop can penetrate and induce a current in the energy harvesting coil.

Detecting the placement of the cookware on the induction cooker can be done by utilizing the energy harvesting coil in combination with the heating coil in the induction cooktop. By modulating the power in the heating coil in a specific sequence will it be possible to automatically determine on which zone the cookware is placed.

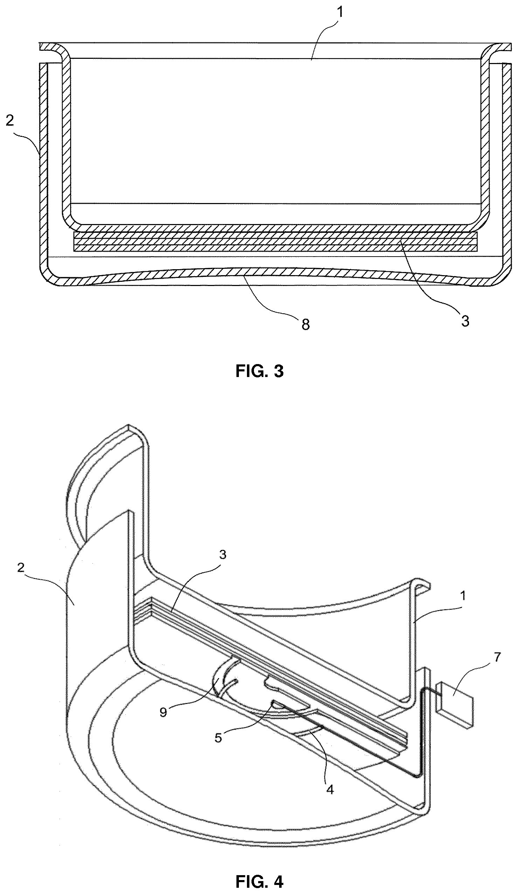

In FIG. 4 there is shown a stamped groove 9 in the inner layers 3 to make space for the energy harvesting coil 4 and the temperature sensor 5. The groove 9 is deep enough so the energy harvesting coil 4 and the temperature sensor 5 can sit flush with the bottom surface of the inner layers 3. This will protect the coil 4 and sensor 5 from impacts during everyday usage and production.

The bottom of the outer wall 2 is pre-bend to a concave shape 8 when seen from the outside, as presented in FIG. 3. This is a favorable solution when the final assembly of the pot or bowl cookware is processed. The inner wall 1 and inner layers 3 are assembled first, then the coil 4 and temperature sensor 5 are placed into the groove 9 in the bottom of the inner layers 3. In further step of assembling, the outer wall 2 is sticked onto the aforementionen assembly so it encloses the inner ferromagnetic layers 3, harvesting coil 4 and temperature sensor 5. The outer wall 2 then is pressed or welded or braced sealed by impact bonding of thin metal layer together with the inner wall 1 and the top seam is sealed, pressed or welded. The finished assembly process leaves the outer wall 2 in tension by holding the inner ferromagnetic layers 3 tightly embedded between the bottoms of the inner (1) and outer (2) walls, the coil 4 and temperature sensor 5 are kept fixed in their predefined positions (groove 9) and also prevented from their vibrations during cooking process. When pot or bowl is assembled, afterward the concave shape 8 essentially disappears.

The temperature sensor 5 is connected to the control electronics 7 to measure the temperature of the cookware. This enables the measured temperature to be communicated to external devices such as a mobile smart device 14 or an induction cooktop 13. The external device 13 or/and 14 will process the data received from the cookware and it may use the data to regulate the power sent to the heating coil 11 (FIG. 1).

The control electronics 7 typically includes a wireless transmitter and antenna that communicates with external devices like an induction cooktop 13 or a mobile smart device 14. The radio transmitter can be implemented using "Bluetooth low energy" or any other standard wireless communication technologies. Furthermore, some additional low power processing electronics may be comprised by the control electronics module 7.

In the most preferred embodiment of the present invention a temperature sensor 5 is placed between the inner 1 and outer walls 2, said temperature sensor 5 is connected to electronics 7 which can show the temperature on a display and/or communicates with one or more remote devices, such as the induction cooktop or a mobile smart device.

In another preferred embodiment, the energy harvesting coil 4 is placed between the inner 1 and outer walls 2 providing electrical power for the electronics 7.

Preferably the control electronics 7 partially store the energy harvested in an energy storing device, e. g., a capacitor, a supercapacitor, or a rechargeable battery (accumulator).

It is preferred that a special groove 9 is provided in one or more of the inner layers 3 and/or the inner or outer walls 1 and 2, to make a space for one or more of the following: the temperature sensor 5, the energy harvesting coil 4 and at least a part of the control electronics 7 (e.g., connecting cables).

Preferably, the outer layer 2 is made of stainless steel, aluminum or other metal which does not screen the induction from the heating coil 11 of the cooktop.

In another preferred embodiment an insulating material or vaccum (6) is used in the rest volume in-between of the inner 1 and outer walls 2.

Preferably, the energy harvesting coil 4 and the electronics 7 are connected to detect the presence and/or strength of the electromagnetic field and communicate this to the remote devices.

It is also preferred that one or more of the inner and/or outer walls (1, 2) and/or inner layers 3 comprise an alloy with Curie point lower than steel, such as iron-nickel-chromium soft magnetic alloy. For example, if the internal layer 3 has a Curie point at 260°C it looses its magnetic capability at temperatures above 260°C. Therefore, the heating will stop when the internal layer 3 reaches this temperature. Together with the control electronics, this provides an additional hardware safety feature, for example, if the temperature control has failed occasionally.

In another preferred embodiment, the bottom of the inner 1 and/or outer wall 2 is pre-bend (FIG. 3, 8) before assembly of the pot so as to provide tension pushing against the inner layers 3, by holding the inner layers 3 tightly embedded between the bottoms of the inner (1) and outer (2) walls, the coil 4 and temperature sensor 5 are kept fixed in their positions.

## Claims

1. Cookware for use on an induction cooktop, comprising at least:
- an inner wall (1) shaped with a cavity to hold a substance to be heated where the inner wall (1) is made of stainless steel or other metal;
- an outer wall (2);
- one or more inner layers (3) of material in between the inner wall (1) and outer wall (2) where at least one of the inner layers (3) is a magnetic alloy, which may be heated by an electromagnetic field generated by the induction cooktop thereby heating the inner wall (1),
**characterized in that**
- the outer wall (2) has been sealed to the inner wall (1) to establish a closed compartment (6) in-between said inner wall (1) and outer wall (2),
- the outer wall (1) is made of electrically conductive material,
- the inner layer (3) facilitates placement for smart cooking control elements between the inner wall (1) and outer wall (2).

2. The cookware according to claim 1, **characterized in that** the smart cooking control elements comprise a temperature sensor (5) placed between the inner (1) and outer walls (2), the sensor (5) being connected to control electronics (7) which optionally can display the temperature or communicate with one or more remote devices, such as the induction cooktop (13) or a mobile smart device (14).

3. The cookware according to claim 1 or 2, **characterized in that** the smart cooking control elements comprise an energy harvesting coil (4) placed between the inner wall (1) and outer wall (2), said energy harvesting coil (4) providing electrical power for the control electronics (7).

4. The cookware according to any one of the claims 1 to 3, **characterized in that** the control electronics (7) at least partially store the energy harvested in an energy storage device, e.g. a capacitor, super capacitor, or rechargeable battery.

5. The cookware according to any one of the claims 1 to 4, **characterized in that** a groove (9) is provided in one or more of the inner layers (3) and/or the inner or outer wall (2) to make a space for one or more of the following: the temperature sensor (5), the energy harvesting coil (4), the control electronics (7).

6. The cookware according to any one of the claims 1 to 5, **characterized in that** the outer wall (2) is made of stainless steel, aluminum or other metal.

7. The cookware according to any one of the claims 1 to 6, **characterized in that** an insulating material is filed or vacuum is left (6) in the rest volume between of the inner and outer walls.

8. The cookware according to any one of the claims 1 to 7, **characterized in that** the energy harvesting coil (4) and the control electronics (7) are connected to detect the presence and/or strength of the electromagnetic field and display it or communicate it to the remote devices.

9. The cookware according to any one of the claims 1 to 8, **characterized in that** one or more of the inner/outer walls (1, 2) and/or inner layers (3) comprise an alloy with Curie point lower than steel, such as iron-nickel-chromium soft magnetic alloy.

10. The cookware according to any one of the claims 1 to 9, **characterized in that** the bottom of the inner layers (3) and/or outer wall (2) is pre-bend before assembly so as to provide tension pushing against the inner layers (3) after the cookware was assembled.
